Europäisches Patentamt

European Patent Office

Office européen des brevets

(19)

(11) Veröffentlichungsnummer: **0 008 788**
**B1**

(12) # EUROPÄISCHE PATENTSCHRIFT

(45) Veröffentlichungstag der Patentschrift:
**23.06.82**

(51) Int. Cl.³: **A 01 G 9/22**

(21) Anmeldenummer: **79103249.3**

(22) Anmeldetag: **03.09.79**

(54) Vorrichtung zur Wärmedämmung an Gewächshäusern.

(30) Priorität: **05.09.78 DE 2838623**
**05.09.78 DE 2838624**

(43) Veröffentlichungstag der Anmeldung:
**19.03.80 Patentblatt 80/6**

(45) Bekanntmachung des Hinweises auf die Patenterteilung:
**23.06.82 Patentblatt 82/25**

(84) Benannte Vertragsstaaten:
**AT BE CH FR GB NL SE**

(56) Entgegenhaltungen:
**DE-A-2 712 676**
**DE-A-2 729 717**
**DE-C-2 642 543**
**DE-U-7 802 785**
**FR-A-2 067 819**
**US-A-4 103 401**

(73) Patentinhaber: **Deibele GmbH & Co., Kanalstrasse 45,
D-7336 Uhingen (DE)**

(72) Erfinder: **Deibele, Manfred, Hauptstrasse 60,
D-7332 Eislingen / Fils (DE)**

(74) Vertreter: **Mayer, Friedrich, Dr. et al, Patentanwälte Dr.
F. Mayer Dipl.-Phys. G. Frank Westliche 24,
D-7530 Pforzheim (DE)**

## Vorrichtung zur Wärmedämmung an Gewächshäusern

Die Erfindung betrifft eine Vorrichtung zur Wärmedämmung an Gewächshäusern und dergleichen, bestehend aus wenigstens einer flexiblen Kunststoff-Folie und einer Vielzahl von über die Folie verteilten Klemmstückpaaren zum Festklemmen der Folie, von welchen Klemmstückpaaren jedes ein an der Gewächshauswand befestigbares, mit einem Stechdorn zum Aufstechen der Folie versehenes Befestigungstück und ein mit Klemmfläche versehenes Steckteil umfaßt, das mit dem Stechdorn verriegelt oder verhaftet werden kann.

Bei einer an sich bekannten Vorrichtung dieser Art wird das Befestigungsstück des Klemmstückpaares an der Gewächshauswand, z. B. an dessen Glasscheiben, festgeklebt.

In der Praxis besteht das zusätzliche Bedürfnis, Vorrichtungen dieser Art an der Skelettkonstruktion des Gewächshauses lösbar zu befestigen. Dabei sind Gewächshäuser unterschiedlichen Alters sowie unterschiedlicher Bauart mit der Vorrichtung auszurüsten. Bei Glasgewächshäusern älterer Bauart liegen die eingekitteten Glasscheiben in der Regel sehr dicht an den rücksseitigen Flächen der als T-Sprossen ausgebildeten Skelettelemente an. Mangels entsprechender Angriffsflächen bestehen daher vielfach Bedenken hinsichtlich der Möglichkeit einer zuverlässigen einfachen Befestigung an solchen T-Sprossen, zumal der zwischen den Anlageflächen der T-Sprosse und der Glasscheibe eingebrachte Kitt außerordentlich hart sein kann. Die Befestigungsstücke der Klemmstückpaare werden daher vielfach mit der Gewächshauswand verklebt.

Auch finden im Querschnitt U-förmige Halterungselemente mit federnden U-Schenkeln zum unmittelbaren Anklemmen der Folien an die Skelettelemente Verwendung. Dabei werden die auf die Skelettelemente aufgelegten Folien von den U-Klammern unmittelbar übergriffen, ohne in den Kitt einzudringen. Eine solche Befestigungsart ist daher nur bei verhältnismäßig großem Abstand zwischen den Glasscheiben und den zugehörigen Anlageflächen der Skelettelemente möglich (Werbeschrift der Firma »IBCO-Universell S. A.« Cédex No. 1992081, Paris la Defense). Zudem sind extrem hohe Klemmdrücke erforderlich.

Es ist auch bekannt, einen Stechdorn an einer das Skelettelement übergreifenden gefalteten Blattfeder unmittelbar zu befestigen (DE-GM-7 802 785).

Der Erfindung liegt die Aufgabe zugrunde, eine Vorrichtung der eingangs genannten Gattung so weiterzubilden, daß sie an Skelettelementen des Gewächshauses mit geringem Arbeitsaufwand zuverlässig und lösbar befestigt werden kann und gleichzeitig leicht herstellbar ist.

Diese Aufgabe wird erfindungsgemäß dadurch gelöst, daß ein das Befestigungsstück tragendes oder als Befestigungsstück ausgebildetes, den Stechdorn tragendes Dornteil und ein vom Stechdorn oder dessen Träger durchgriffenes Spannteil mit wenigstens zwei das Skelettelement in gegensätzlicher Richtung hintergreifenden Hintergriffsorganen aus einer Nicht-Hintergriffsposition mit größerem gegenseitigen Abstand der Hintergriffsorgane durch Relativbewegung in eine Hintergriffsposition mit geringerem Abstand der Hintergriffsorgane überführbar sind, bei welcher Hintergriffsposition Dornteil und Spannteil durch ein kraftübersetzendes Teil in einer Richtung flächig aufeinandergepreßt sind, die senkrecht zur Gewächshauswand steht.

Bei einer solchen Lösung wirken die erforderlichen Spannkräfte nicht auschließlich in Angriffsrichtung der Hintergriffsorgane, in welcher sie aus naheliegenden Gründen am wirksamsten wären. Sie sind vielmehr primär senkrecht zur Gewächshauswandung gerichtet, obwohl bei nachträglicher Anbringung der Vorrichtung zur Wärmedämmung die Hintergriffsorgane vielfach in sehr harten Kitt eingetrieben werden müssen und eine mit der Eingriffsrichtung der Hintergriffsorgane übereinstimmende Spannrichtung erwünscht wäre. Andererseits ergibt sich bei der erfindungsgemäßen Lösung der Vorteil, daß Dornteil und Spannteil bei Montage aneinandergeführt sind und flächig aufeinanderliegen, wodurch die Belastungsfähigkeit des Befestigungssystems erhöht wird.

Gemäß einer weiteren Lösung der Aufgabe ist erfindungsgemäß vorgesehen, daß bei einer Vorrichtung der eingangs genannten Gattung ein als das Befestigungsstück ausgebildetes, den Stechdorn tragendes Dornteil und ein vom Stechdorn durchgriffenes Spannteil mit wenigstens zwei das Skelettelement in gegensätzlicher Richtung hintergreifenden Hintergriffsorganen aus einer Nicht-Hintergriffsposition mit größerem gegenseitigen Abstand der Hintergriffsorgane durch Relativbewegung in eine Hintergriffsposition mit geringerem Abstand der Hintergriffsorgane dadurch überführbar sind, daß der Steg eines U-förmigen Bügels drehbar an einem Schwenklager im Spannteil gelagert ist, wobei die abgewinkelten Enden der U-Schenkel des Bügels drehbar gelagert sind, wobei das Schwenklager des Spannteils bei Hintergriffsposition näher an der Gewächshauswand liegt als das Schwenklager des Dornteils.

Bei einer solchen Ausgestaltung kann die Vorrichtung bei einfacherer Handhabung schneller angebracht werden.

Die Erfindung wird nicht berührt durch eine bekannte Vorrichtung zur Befestigung von Platten an Skelettelementen, bei welcher das Skelettelement von dem Hintergriffsorgan eines einen Befestigungsbolzen für die Platte tragenden Bolzenteils und dem Hintergriffsorgan eines Spannteils hintergriffen wird. Bolzenteil und Spannteil sind dabei nämlich — ohne gegenseitige Anlage und Zentrierung — über abgewinkelte Enden miteinander verschraubt, die senkrecht zur planen Oberfläche des Skelettelementes stehen (FR-PS-2 067 819).

Weitere Ausgestaltungen der Erfindung ergeben sich aus den Unteransprüchen.

Nachstehend wird die Erfindung an Hand der Zeichnungen an einigen Ausführungsbeispielen erläutert. Es zeigt

Fig. 1 in perspektivischer Darstellung einen Ausschnitt aus der Gewächshauswand mit dem Dornteil, dem Spannteil und dem Befestigungsstück der Vorrichtung,

Fig. 2 ein Ausführungsbeispiel, bei welchem Dornteil und Spannteil mittels eines Bügels gelenkig miteinander verbunden sind, von oben,

Fig. 3—5 ein Ausführungsbeispiel, bei dem das Spannteil eine Blattfeder ist, von vorne (Fig. 3) und von oben (Fig. 4), wobei Fig. 5 das Dornteil als solches zeigt und

Fig. 6 und 7 eine Variante des Ausführungsbeispiels der Fig. 3 bis 5.

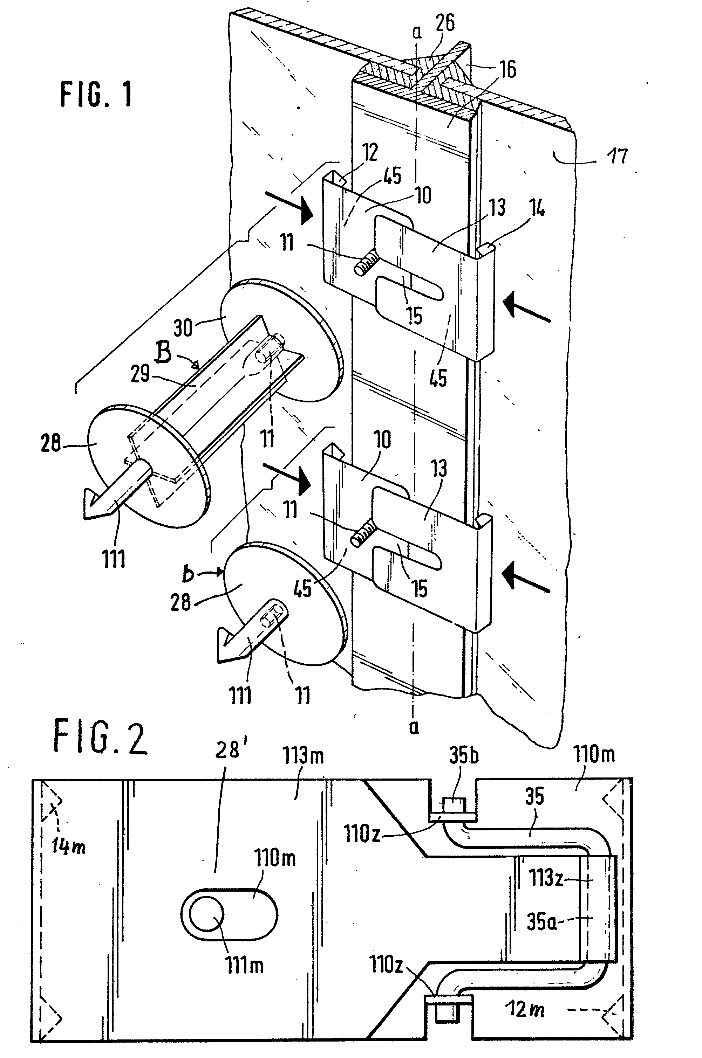

Im Ausführungsbeispiel der Fig. 1 ist das einen Gewindestift als Dornträger 11 aufweisende Dornteil 10 ein Stanzteil aus Blech von etwa quadratischer Grundform mit umgebördeltem Rand. Der Rand läuft in zwei um 90 Grad umgebogenen Hintergriffsorgane 12 aus, die bei Überführung in Hintergriffsposition in den Kitt 26 der Gewächshauswand eindringen und dabei das Skelettelement 16 hintergreifen. Das Spannteil 13 ist analog dem Dornteil 10 gestaltet. Es weist jedoch einen horizontal verlaufenden Durchtrittsschlitz 15 auf, der vom Dornträger 11 des Dornteils 10 durchgriffen ist. An den Dornträger 11 ist ein aus Klemmteller 28, Distanzrippen 29 und Basisteller 30 bestehendes Befestigungsstück B mit Stechdorn 111 aufschraubbar. In der Figur ist ein weiteres alternativ anzuwendendes Befestigungsstück b mit Stechdorn 111 zeichnerisch dargestellt, das ohne Distanzrippen und ohne Basisteller ist. Dieses Befestigungsstück b ist mit seinem Klemmteller 28 unmittelbar auf den Dornträger 11 aufschraubbar, wobei der Klemmteller 28 flächig auf der Oberfläche des Spannteils 13 aufliegt. Dornteil und Spannteil sind je auf einer Seite mit den Hintergriffsorganen 12 und 14 versehen, die in einer linearen Relativbewegung in Hintergriffsposition bewegbar sind. Bei dieser Relativbewegung ist das Spannteil 13 an dem Dornträger 11 des Dornteils 10 geführt, der einen Durchtrittsschlitz 15 des Spannteils 13 durchgreift. Dabei liegt das Spannteil flächig am Dornteil an. Dornteil und Spannteil sind durch einen senkrecht zur Gewächshauswand gerichteten Druck des auf den Träger 11 des Stechdorns aufschraubbaren Befestigungsstücks B bzw. b miteinander und mit dem Skelettelement 16 verspannbar. Bei Herbeiführung der Verspannung wirkt das Gewinde des Trägers 11 als Kraftübersetzer. Fig. 1 zeigt Stechdorne 111, die eine Verriegelung mit einem (dort nicht gezeichneten) Steckteil zur Verklemmung der Folie zwischen Steckteil und Klemmteller 28 ermöglichen.

Im Ausführungsbeispiel der Fig. 2 sind Dornteil 110m und Spannteil 113m mittels Schnappgelenk in stabile Hintergriffsposition überführbar. Das Schnappgelenk umfaßt einen U-förmigen Bügel 35, dessen Steg 35a in einem Schwenklager 113z des Spannteils 113m gelagert ist und dessen rechtwinklig abgebogene Enden 35b in Schwenklagern 110z des Dornteils schwenkbar gelagert sind. Die Schwenklager 110z sind durch senkrecht vom Blechkörper des Dornteils teilweise abgetrennte, aufgebogene Lappen des Dornteils 110m gebildet, welche die Enden 35b in kreisförmigen Durchgriffsöffnungen (in Fig. 2 nicht sichtbar) aufnehmen. In gespannter Hintergriffsposition liegt das Schwenklager 113z des Spannteils 113m näher zu der Gewächshauswand als die Schwenklager 110z des Dornteils 10m. Dadurch ergibt sich eine stabile Hintergriffsposition. Die Folie ist auf die Klemmfläche 28' des Spannteils 113m mittels des auf den Stechdorn 111m aufsteckbaren (dort nicht dargestellten) Steckteils flächig aufpreßbar.

Bei aufgeklapptem Schnappgelenk befinden sich die Hintergriffsorgane 14m und 12m in einem maximalen Abstand und können am Skelettelement zwangslos angelegt werden. Bei Eindrücken des Bügels 35 gelangen Spannteil und Dornteil in eine zunehmend parallele Lage zueinander, wobei sich die Hintergriffsorgane 14m und 12m einander annähern. Nach Überschreiten eines Totpunktes, in welchem sich die Schwenklager des Spannteils und des Dornteils etwa in gleichem Abstand von der Gewächshauswand 17 befinden, gelangt das System in eine stabile Spannposition, bei welcher das Schwenklager 113z des Spannteils 113m sich in geringerem Abstand zur Gewächshauswand 17 befindet als die Schwenklager 110z des Dornteils. Das Ausführungsbeispiel der Fig. 2 kann auch in kinematischer Umkehrung verwirklicht werden, indem der Steg 35a am Dornteil und die Erden 35b des Bügels 35 am Spannteil gelagert sind.

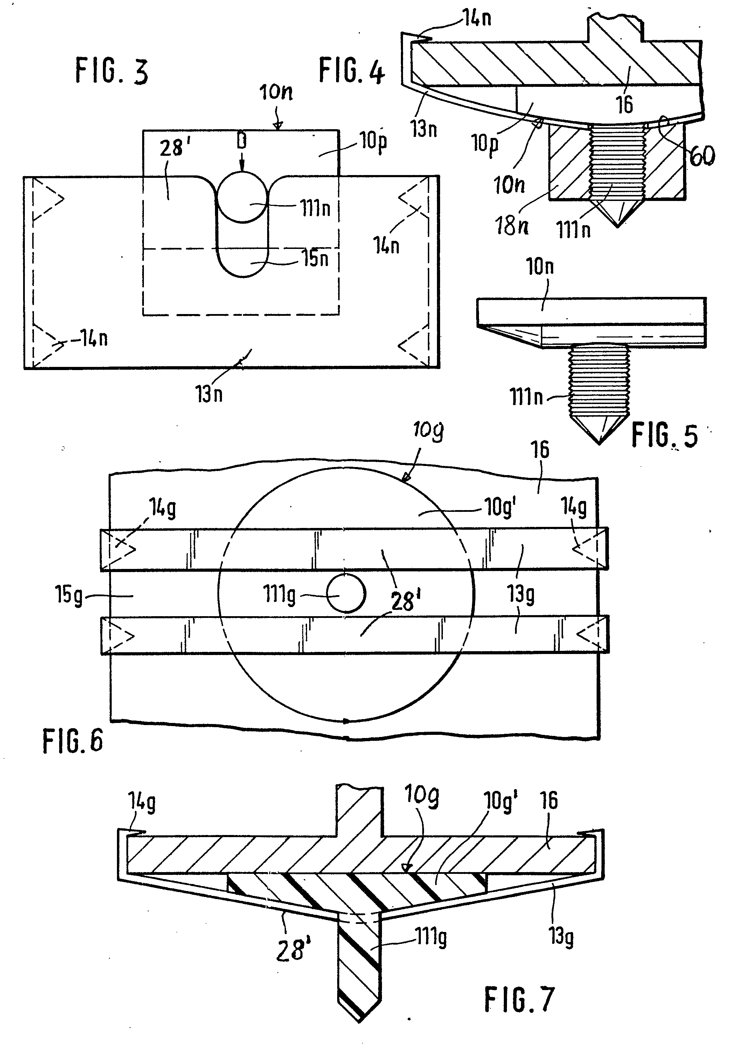

Im Ausführungsbeispiel der Fig. 3 bis 5 ist das Spannteil 13n eine das Skelettelement 16 mit Hintergriffsorganen 14n hintergreifende Blattfeder. Diese wird in Befestigungsposition dadurch vorgespannt, daß das Dornteil 10n mit keilförmig gestaltetem Fuß 10p zwischen der Blattfeder und der Oberfläche des Skelettelementes 16 in Richtung D (Fig. 3) eingeschoben wird, wobei sich der Stechdorn 111n in den Schlitz 15n der Blattfeder hineinbewegt.

Wie aus Fig. 4 ersichtlich, ist auf den Dorn 111n ein Steckteil 18n aufsteckbar. Um eine Reibungsverhaftung zwischen Steckteil 18n und dem Stechdorn 111n herbeizuführen, sind die miteinander korrespondierenden Friktionsflächen von Steckteil 18n und Dorn 111n geriffelt. Die Folie ist zwischen der Klemmfläche 28' der Blatfeder und der Preßfläche 60 des Steckteils flächig verklemmt.

Das Ausführungsbeispiel der Fig. 6 und 7

unterscheidet sich von dem Ausführungsbeispiel der Fig. 3 bis 5 dadurch, daß als Spannteil 13g zwei miteinander identische, streifenförmige Blattfedern vorgesehen sind. Diese werden bei Überführen in Hintergriffsposition in Richtung der Längsachse a-a des Skelettelements 16 von oben und von unten auf den beidseits abgeschrägten Fuß 10g' des Dornteils 10g aufgeschoben. Dabei werden die Blattfedern auf den Schrägflächen des Fußes 10g' geführt und dabei aufgewölbt. Hierdurch tritt eine gegenseitige Annäherung der Hintergriffsorgane 14g der Blattfeder ein, welche das Skelettelement 165 hintergreifen.

Alle Ausführungsbeispiele, insbesondere auch dasjenige der Fig. 2, sind bei unterschiedlich breiten Skelettelementen 16 einsetzbar. Bei dem letztgenannten Beispiel können mehrere Lappen als Schwenklager 110z in unterschiedlichen Abstand zur Längsachse a-a des Skelettelements 16 vorgesehen sein, in welche die Enden 35b entsprechend der Breite des Skelettelements 16 alternativ gelagert werden können. Das gleiche Ergebnis einer Anpassung wird erreicht, wenn langgestreckte Lappen dadurch mehrere Schwenklager 110z bilden, daß sie Durchgriffsöffnungen für die Enden 35b des Bügels 35 aufweisen.

**Patentansprüche**

1. Vorrichtung zur Wärmedämmung an Gewächshäusern und dergleichen, bestehend aus wenigstens einer flexiblen Kunststoff-Folie und einer Vielzahl von über die Folie verteilten Klemmstückpaaren zum Festklemmen der Folie, von welchen Klemmstückpaaren jedes ein an der Gewächshauswand befestigbares, mit einem Stechdorn (111; 111n; 111g) zum Aufstechen der Folie versehenes Befestigungsstück (B; b) und ein mit Klemmfläche (60 in Fig. 4) umfaßt, das mit dem Stechdorn (111; 111n; 111g) verriegelt oder verhaftet werden kann, dadurch gekennzeichnet, daß ein das Befestigungsstück (B; b in Fig. 1) tragendes oder als Befestigungsstück ausgebildetes (Fig. 3—7) den Stechdorn (111; 111n; 111g) tragendes Dornteil (10; 10n; 10g) und ein vom Stechdorn oder dessen Träger (1) durchgriffenes Spannteil (13; 13n; 13g) mit wenigstens zwei das Skelettelement (16) in gegensätzlicher Richtung hintergreifenden Hintergriffsorganen (12, 14; 14n; 14g) aus einer Nicht-Hintergriffsposition mit größerem gegenseitigen Abstand der Hintergriffsorgane durch Relativbewegung in eine Hintergriffsposition mit geringerem Abstand der Hintergriffsorgane überführbar sind, bei welcher Hintergriffsposition Dornteil (10; 10n; 10g) und Spannteil (13; 13n; 13g) durch ein kraftübersetzendes Teil (11 in Fig. 1; 10p in Fig. 3, 4; 10g' in Fig. 6, 7) in einer Richtung flächig aufeinandergepreßt sind, die senkrecht zur Gewächshauswand steht (Fig. 1; 3—7).

2. Vorrichtung nach Patentanspruch 1, dadurch gekennzeichnet, daß Dornteil (10) und Spannteil (13) durch den senkrecht zur Gewächshauswand gerichteten, axialen Druck des auf den Stechdornträger (11) aufschraubbaren Befestigungsstücks (B; b) in Hintergriffsposition miteinander verspannbar sind (Fig. 1).

3. Vorrichtung nach Patentanspruch 1, dadurch gekennzeichnet, daß Spannteil (13n bzw. 13g) durch wenigstens eine Blattfeder gebildet ist, die durch ein keilförmig gestaltetes, zwischen Blattfeder und Skelettelement (16) angeordnetes Dornteil (10n; 10g) vorgespannt ist (Fig. 3—7).

4. Vorrichtung zur Wärmedämmung an Gewächshäusern und dergleichen, bestehend aus wenigstens einer flexiblen Kunststoff-Folie und einer Vielzahl von über die Folie verteilten Klemmpaaren zum Festklemmen der Folie, von welchen jedes eine an der Gewächshauswand befestigbares, mit einem Stechdorn (111m) zum Aufstechen der Folie versehenes Befestigungsstück und ein mit Klemmfläche versehenes Steckteil umfaßt, das mit dem Stechdorn (111m) verriegelt oder verhaftet werden kann, dadurch gekennzeichnet, daß ein als das Befestigungsstück ausgebildetes, den Stechdorn (111m) tragendes Dornteil (110m) und ein vom Stechdorn (111m) durchgriffenes Spannteil (113m) mit wenigstens zwei das Skelettelement (16) in gegensätzlicher Richtung hintergreifenden Hintergriffsorganen (14m; 12m) aus einer Nicht-Hintergriffsposition mit größerem gegenseitigen Abstand der Hintergriffsorgane durch Relativbewegung in eine Hintergriffsposition mit geringerem Abstand der Hintergriffsorgane dadurch überführbar sind, daß der Steg (35a) eines U-förmigen Bügels (35) drehbar an einem Schwenklager (113z) im Spannteil (113m in Fig. 2) gelagert ist, wobei die abgewinkelten Enden (35b) der U-Schenkel des Bügels (35) drehbar im Dornteil (110m) gelagert sind und wobei das Schwenklager (113z) des Spannteils (113m) bei Hintergriffsposition näher zu der Gewächshauswand (17) liegt als das Schwenklager (110z) des Dornteils (110m in Fig. 2).

**Claims**

1. A heat insulating device for greenhouses and similar, consisting of at least one flexible synthetic material sheet and a plurality of pairs of clamping elements distributed over the sheet for clamping said sheet, each one of such pairs of clamping elements comprising a fixation element (B; b) which can be fixed to the greenhouses wall and is provided with a punching pin (111; 111n; 111g) for punching the sheet and a plug-in member (18n in Fig. 4) provided with a clamping surface (60 in Fig. 4) which can be latched or locked onto the punching pin (111; 111n; 111g), characterized in that a pin element (10; 10n; 10g) supporting the fixation element (B; b in Fig. 1) or realized as a fixation element and supporting the punching pin (111; 111n; 111g) (Fig. 3—7) and a clamping element (13; 13n; 13q) through which extends the punching pin or the support thereof and which comprises at least two rear engagement members (12; 14; 14n; 14g) which are engageable behind the skeleton element (16) from opposite directions, can be brought, through a relative movement, from a position in which the rear engagement members are at a larger distance from each other and not in the rear engagement position, to a rear engagement position in which the rear engagment elements are at a smaller distance from each other, position in which the pin element (10; 10n; 10g) and the clamping element (13; 13n; 13g) are pressed against each other flatwise by a force transmission member (11 in Fig. 1; 10p in Fig. 3, 4; 10g' in Fig. 6, 7) in a direction perpendicular to the greenhouse wall (Fig. 1; 3—7).

2. A device according to claim 1, the pin element (10) and the clamping element (13) are pressed against each other when they are in their rear engagement position through the axial pressure directed perpendicularly to the greenhouse wall and exerted by the fixation element (B; b) screwable onto the punching pin support (11) (Fig. 1).

3. A device according to claim 1, the clamping element (13a; 10g) is at least formed of one leaf-spring which is prestressed by a wedge-shaped pin element (10n; 10g) engaged between the leaf-spring and the skeleton element (16) (Fig. 3—7).

4. A heat insulting device for greenhouses and similar, consisting of at least one flexible synthetic material sheet and a plurality of pairs of clamping elements distributed over the sheet for clamping said sheet, each one of said pairs of clamping elements comprising a fixation element which can be fixed to the greenhouse wall and is provided with a punching pin (111m) for punching the sheet, and a plug-in member provided with a clamping surface; which can be latched or locked onto the punching pin (111m) characterized in that a pin element (110m) formed as a fixation element and supporting the punching pin (111m) and a clamping element (113m) through which extends the punching pin (111m) and which comprises at least two rear engagement members (14m; 12m) which are engageable behind the skeleton element (16) from opposite directions, can be brought, through a relative movement, from a position in which the rear engagement members are at a larger distance from each other and not in the rear engagement position, to a rear engagement position in which the rear engagement members are at a smaller distance from each other, and that the cross-bar (35a) of a U-shaped stirrup (35) is rotatably mounted in a swivel bearing (113z) of the clamping element (113m in Fig. 2), the curved ends (35b) of the legs of the U-shaped stirrup (35) being rotatably mounted in the pin element (110m), the swivel bearing (13z) of the clamping element (113m) being then closer to the greenhouse wall (17) than the swivel bearing (110z) of the pin element (110m in Fig. 2) in the rear engagement position.

**Revendications**

1. Dispositif d'isolation thermique pour serres et analogues, constitué par au moins une feuille de matière plastique souple et une pluralité de paires d'éléments de serrage répartis sur la feuille pour serrer cette feuille, chaque paire d'éléments de serrage comprenant un élément de fixation (B; b) qui peut être fixé à la paroi de la serre, muni d'une broche de perçage (111; 111n; 111g) sur laquelle on enfonce la feuille et un élément d'enfichage (18n à la figure 4) muni d'une surface de serrage (60 à la figure 4), et qui peut être verrouillé ou maintenu sur la broche de perçage (111; 111n; 111g), caractérisé en ce qu'un élément à broche (10; 10n; 10g) supportant l'élément de fixation (B; b à la figure 1) ou constitué sous forme d'élément de fixation et supportant la broche de perçage (111; 111n; 111g, figures 3—7) et un élément de serrage (13; 13n; 13g) qui est traversé par la broche de perçage ou son support et qui comporte au moins deux organes d'engagement arrière (12, 14; 14n, 14g) coopérant par l'arrière avec l'élément d'ossature (16) dans des directions opposées, peuvent être amenés par un mouvement relatif d'une position de non-engagement par l'arrière dans laquelle les organes d'engagement arrière sont disposés à une distance mutuelle plus importante vers une position d'engagement par l'arrière dans laquelle les éléments d'engagement arrière sont situés à une faible distance l'un de l'autre, position dans laquelle l'élément à broche (10; 10n; 10g) et l'élément de serrage (13; 13n; 13g) sont pressés l'un contre l'autre à plat par un élément de transmission de force (11 à la figure 1; 10p aux figures 3, 4; aux figures 6, 7) dans une direction perpendiculaire à la paroide la serre (figures 1, 3—7).

2. Dispositif selon la revendication 1, caractérisé en ce que l'élément à broche (10) et l'élément de serrage (13) sont serrés l'un avec l'autre en position d'engagement par l'arrière au moyen de la pression axiale dirigée perpendiculairement à la paroi de la serre qui est exercée par l'élément de fixation (B; b) pouvant être vissé sur le support (11) de broche de perçage (figure 1).

3. Dispositif selon la revendication 1, caractérisé en ce que l'élément de serrage (13a ou 13g) est constitué par au moins un ressort à lame que est soumis à une précontrainte par un élément à broche (10n; 10g) en forme de coin et disposé entre le ressort à lame et l'élément d'ossature (16) (figures 3—7).

4. Dispositif d'isolation thermque pour serres et analogues, constitué par au moins une feuille en matière plastique souple et une pluralité de paires d'éléments de serrage répartis sur la feuille pour serrer cette feuille, chaque paire d'éléments de serrage comprenant un élément de fixation pouvant être fixée à la paroi de la serr muni d'une broche de perçage (111m), sur laquelle on enfonce la feuille, et un élément d'enfichage muni d'une surface de serrage, qui peut être verrouillé ou maintenu avec la broche de perçage (111m), caractérisé en ce qu'un élément à broche (110m) supportant la broche de perçage (111m) et constitué sous forme d'un élément de fixation, et un élément de serrage (113m) qui est traversé par la broche de perçage (111m) et qui comprend au moins deux organes d'engagement arrière (14m; 12m) coopérant par l'arrière avec l'élément d'ossature (16) dans des directions opposées, peuvent être amenés par un mouvement relatif d'une position de non-engagement par l'arrière dans laquelle les organes d'engagement arrière sont à une distance mutuelle importante vers une position d'engagement par l'arrière dans laquelle les organes d'engagement arrière sont à une plus faible distance l'un de l'autre, et en ce que la branche (35a) d'un étrier en U (35) est montée rotative dans un palier de pivotement (113z) de l'élément de serrage (113m à la figure 2), les extrémités recourbées (35b) des branches de l'U de l'étrier (35) étant montées rotatives dans l'élément à broche (110m), le palier de pivotement (113z) de l'élément de serrage (113m) étant alors plus proche de la paroi (17) de la serre que le palier de pivotement (110z) de l'élément à broche (110m à la figure 2) quand la position d'engagement par l'arrière est atteinte.

0 008 788

**FIG. 1**

**FIG. 2**

7

FIG. 3

FIG. 4

FIG. 5

FIG. 6

FIG. 7

9